# EUROPEAN PATENT SPECIFICATION

(11) **EP 2 940 767 B1**
(45) Date of publication and mention of the grant of the patent: **03.04.2019**
(21) Application number: 13869650.5
(22) Date of filing: 20.12.2013
(51) Int. Cl.: H01M 8/1004, H01M 8/0247, H01M 8/0273, H01M 8/0232, H01M 8/0284, H01M 8/242, H01M 8/1018

(54) **MEMBRANE ELECTRODE ASSEMBLY AND MEMBRANE ELECTRODE ASSEMBLY FABRICATION METHOD**
MEMBRANELEKTRODENANORDNUNG UND MEMBRANELEKTRODENANORDNUNGSHERSTELLUNGSVERFAHREN
ENSEMBLE MEMBRANE-ÉLECTRODE ET PROCÉDÉ DE FABRICATION D'ENSEMBLE MEMBRANE-ÉLECTRODE

(30) Priority: 27.12.2012 JP 2012285047
(43) Date of publication of application: 04.11.2015
(73) Proprietor: Nissan Motor Company, Limited, Kanagawa-ku Yokohama-shi Kanagawa 221-0023 (JP); W.L. Gore & Associates, Co., Ltd., Tokyo 108-0075 (JP)
(72) Inventor: YAMAMOTO, Masaya, Atsugi-shi Kanagawa 243-0123 (JP); KASHIMA, Hisashi, Atsugi-shi Kanagawa 243-0123 (JP); HORIBE, Norifumi, Atsugi-shi Kanagawa 243-0123 (JP); TOYOSHIMA, Kenichi, Atsugi-shi Kanagawa 243-0123 (JP); NOMURA, Tomoya, Tokyo 108-0075 (JP); TAKANE, Tomoyuki, Tokyo 108-0075 (JP); KOUNO, Aya, Tokyo 108-0075 (JP)
(74) Representative: Hoefer & Partner Patentanwälte mbB
(86) International application number: PCT/JP2013/084348
(87) International publication number: WO 2014/103963

(56) References cited:
- EP-A1- 2 048 730
- JP-A- H0 878 029
- JP-A- H06 338 335
- JP-A- 2001 243 963
- JP-A- 2006 278 250
- JP-A- 2008 218 304
- JP-A- 2008 293 684
- JP-A- 2008 293 684
- JP-A- 2009 181 951
- JP-A- 2013 197 004

## Description

### [Technical Field]

The present invention relates to a membrane electrode assembly and a membrane electrode assembly manufacturing method.

### [Background Art]

A unit cell configuring a fuel cell is formed by alternately stacking a separator and a membrane electrode assembly (MEA). The membrane electrode assembly includes a polymer electrolyte membrane, a catalyst layer, and a gas diffusion layer. However, the strength of the membrane electrode assembly is comparatively weak, and thus a resin frame for reinforcement is disposed around the membrane electrode assembly, but the resin invades an interface between the catalyst layer and the gas diffusion layer due to a resin pressure for molding the resin frame, and thus defective molding may occur. For this reason, a cross-sectional surface of a circumferential edge portion of the gas diffusion layer and the catalyst layer is tapered, and thus the resin pressure is mitigated and the intrusion of the resin is suppressed (for example, refer to Patent. Documents 1 or 2).

### [Citation List]

### [Patent Literature]

[Patent Literature 1] Japanese Patent Application Publication No. 2009-181951
[Patent Literature 2] European Patent Application EP 2 048 730 A1

### [SUMMARY OF INVENTION]

### [Problems to be Solved by the Invention]

However, the thickness of the gas diffusion layer and the catalyst layer is several tens of micrometer, and thus it is difficult to perform tapering processing with respect to a thickness direction, and thus it is difficult to suppress intrusion of the resin into the interface between the catalyst layer and the gas diffusion layer, and prevent the occurrence of the defective molding, reliably.

The present invention is made in order to solve the problems according to the related art described above, and aims at providing a membrane electrode assembly and a membrane electrode assembly manufacturing method which can suppress defective molding when a resin frame integrated with a peripheral edge of the membrane electrode assembly is molded.

### [Means to Solve the Problems]

The problems are solved as defined by the appended claims. An aspect of the present invention for attaining the object described above is a membrane electrode assembly comprising: a polymer electrolyte membrane; a catalyst layer disposed on a surface of the polymer electrolyte membrane; and a gas diffusion layer disposed on a surface of the catalyst layer, the surface opposite to a surface on which the polymer electrolyte membrane is disposed, wherein the gas diffusion layer includes a corner portion which is chamfered such that the corner portion does not have an acute angle.

Another aspect of the present invention for attaining the object described above is a membrane electrode assembly manufacturing method, comprising: a step of stacking a catalyst layer on a surface of a polymer electrolyte membrane; a step of stacking a gas diffusion layer on a surface of the catalyst layer, the surface opposite to a surface on which the polymer electrolyte membrane is disposed; and a chamfering step, wherein, in the chamfering step, a corner portion of the gas diffusion layer is chamfered such that the corner portion does not have an acute angle.

### [Effects of Invention]

According to the present invention, when a resin frame integrated with the peripheral edge of the membrane electrode assembly is molded by disposing the membrane electrode assembly which is a stacked body in which the catalyst layer and the gas diffusion layer are stacked on the polymer electrolyte membrane, in a cavity of a molding die, and by injecting a molding resin in a melted state toward a peripheral edge of the membrane electrode assembly, the chamfered corner portion of the membrane electrode assembly mitigates a resin pressure due to the injection of the molding resin or the flow of the molding resin. For this reason, intrusion of the molding resin due to deformation in the corner portion of the membrane electrode assembly, for example, warpage deformation of the gas diffusion layer can be prevented. That is, it is possible to provide the membrane electrode assembly and the membrane electrode assembly manufacturing method which can suppress defective molding when a resin frame integrated with a peripheral edge of the membrane electrode assembly is molded.

Other objects, characteristics, and properties of the present invention will be obvious with reference to a preferred embodiment exemplified in the following description and the appended drawings.

### [Brief description of drawings]

Fig. 1 is an exploded perspective view for illustrating a fuel cell according to an embodiment of the present invention.
Fig. 2 is a cross-sectional view for illustrating a cell structure of the fuel cell shown in Fig. 1.
Fig. 3 is a cross-sectional view for illustrating the shape of a resin frame integrated with a peripheral edge of a membrane electrode assembly shown in Fig. 2.
Fig. 4 is a plan view for illustrating the shape of the membrane electrode assembly shown in Fig. 3.
Fig. 5 is a schematic view for illustrating a resin pressure when chamfering is performed as shown in Fig. 4.
Fig. 6 is a schematic view for illustrating a resin pressure of a comparative example in which the chamfering is not performed.
Fig. 7 is a cross-sectional view for illustrating a molding apparatus applied to resin frame molding in a fuel cell manufacturing method according to the embodiment of the present invention.
Fig. 8 is a cross-sectional view for illustrating die clamping in a resin frame molding step of the fuel cell manufacturing method according to the embodiment of the present invention.
Fig. 9 is a cross-sectional view for illustrating resin injection in the resin frame molding step of the fuel cell manufacturing method according to the embodiment of the present invention.
Fig. 10 is a cross-sectional view for illustrating resin injection according to the comparative example.
Fig. 11 is a plan view for illustrating Modification 1 according to the embodiment of the present invention.
Fig. 12 is a plan view for illustrating Modification 2 not according to the embodiment of the present invention.
Fig. 13 is a cross-sectional view for illustrating Modification 3 according to the embodiment of the present invention.
Fig. 14 is a cross-sectional view for illustrating Modification 4 according to the embodiment of the present invention.
Fig. 15 is a plan view for illustrating Modification 5 according to the embodiment of the present invention.
Fig. 16 is a plan view for illustrating Modification 6 according to the embodiment of the present invention.
Fig. 17 is a plan view for illustrating Modification 7 according to the embodiment of the present invention.

### [Embodiments of Carrying Out the Invention]

Hereinafter, the embodiment of the present invention will be described with reference to the drawings.

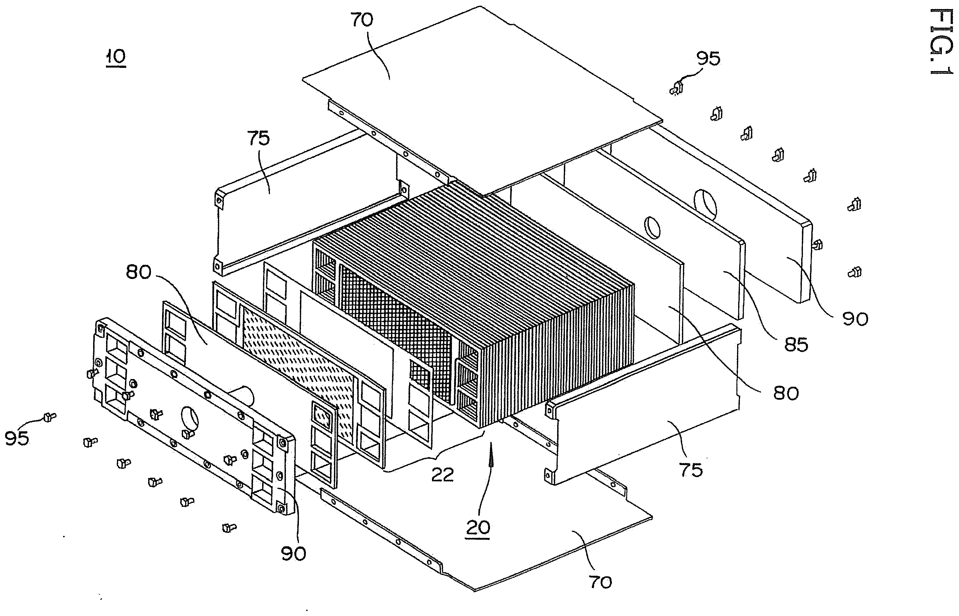

Fig. 1 is an exploded perspective view for illustrating a fuel cell according to the embodiment of the present invention.

A fuel cell 10 according to the embodiment of the present invention, for example, is formed of a polymer electrolyte fuel cell using hydrogen as fuel and is used as a power source. The polymer electrolyte fuel cell (PEFC) can be downsized, densified, and highly output, and is preferably applied as a power source for driving of a moving body such as a wheeled vehicle in which a loading space is limited, in particular, is preferably used for an automobile in which start-up and stop or an output variation of a system frequently occurs . In this case, the polymer electrolyte fuel cell can be installed under a seat in a center portion of a body of the automobile (fuel cell vehicle), in a lower portion of a rear luggage room, and in a front engine room of the vehicle, for example. From a viewpoint of widening an indoor space and the luggage room, it is preferable that the polymer electrolyte fuel cell is installed under the seat.

As shown in Fig. 1, the fuel cell 10 includes a stack portion 20, a fastening plate 70, a reinforcing plate 75, a current-collector plate 80, a spacer 85, an end plate 90, and a bolt 95. The stack portion 20 is configured of a stacked body of unit cells 22.

The fastening plate 70 is disposed on a bottom surface and an upper surface of the stack portion 20, and the reinforcing plate 75 is disposed on both sides of the stack portion 20. That is, the fastening plate 70 and the reinforcing plate 75 configure a casing surrounding the stack portion 20.

The current-collector plate 80 is formed of a gas impermeable conductive member such as a dense carbon or a copper plate, includes an output terminal for outputting an electromotive force generated in the stack portion 20 disposed thereon, and is disposed on both sides as to a stacking direction of the unit cell 22, that is, a front surface and a rear surface of the stack portion 20.

The spacer 85 is disposed on the outside of the current-collector plate 80 disposed on the back surface of the stack portion 20.

The end plate 90 is formed of a material having rigidity, for example, a metal material such as steel, and is disposed on the outside of the current-collector plate 80 disposed on the front surface of the stack portion 20, and disposed on the outside of the spacer 85. The end plate 90 includes a fuel gas introduction port, a fuel gas discharge port, an oxidizing gas introduction port, an oxidizing gas discharge port, a cooling water introduction port, and a cooling water discharge port in order to circulate a fuel gas composed of hydrogen, oxidizing gas composed of oxygen, and a cooling medium composed of cooling water.

The bolt 95 is used for maintaining the stack portion 20 positioned in an inner portion at a pressed state by fastening the end plate 90, the fastening plate 70, and the reinforcing plate 75, and by exerting a fastening force thereof in the stacking direction of the unit cell 22. The number of bolts 95 and positions of bolt holes may be suitably changed. In addition, a fasten mechanism is not limited to screwing means, and other devices may be applied.

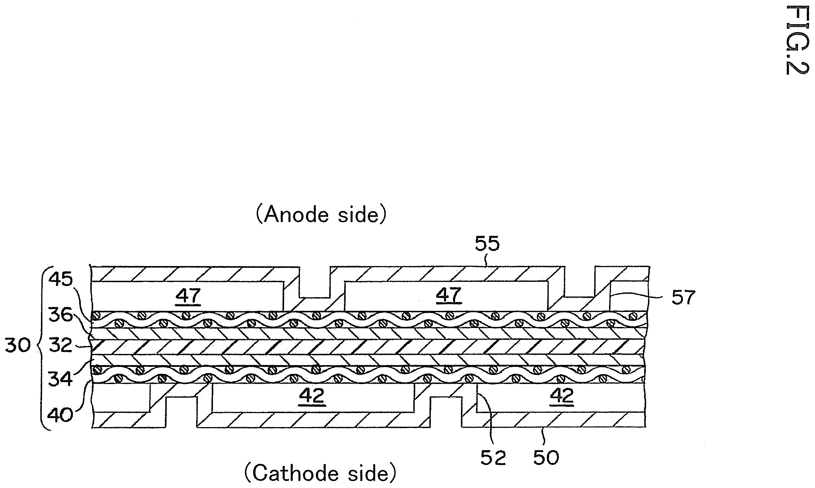

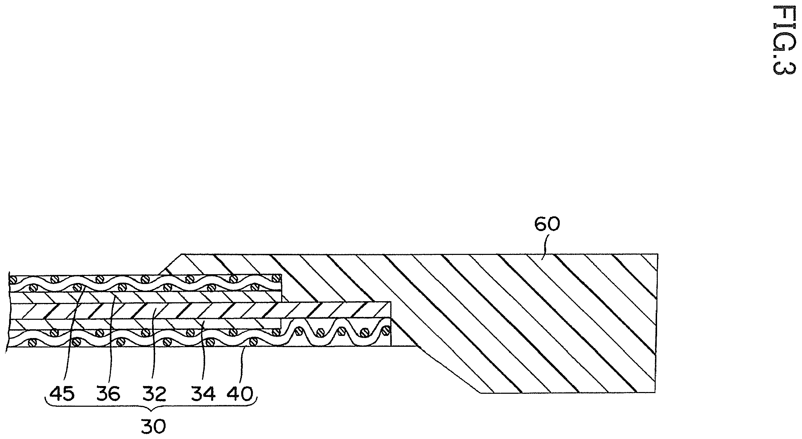

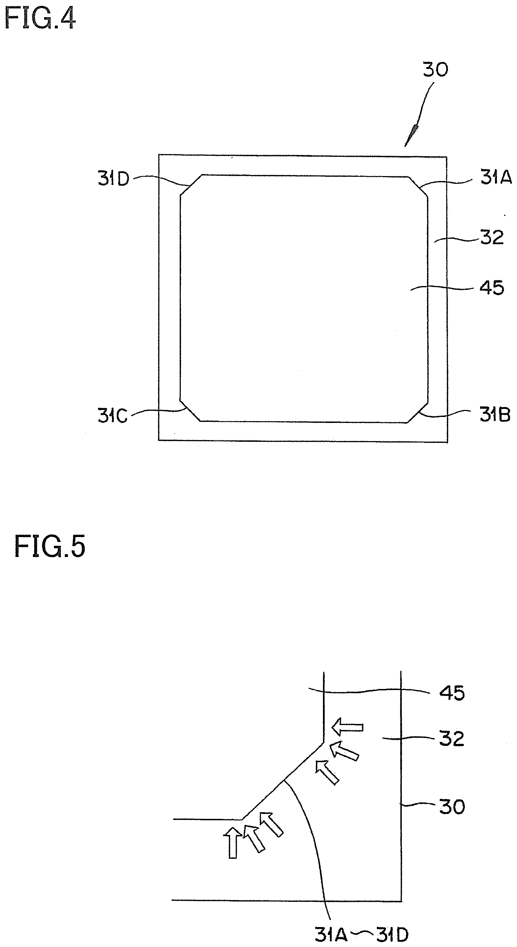

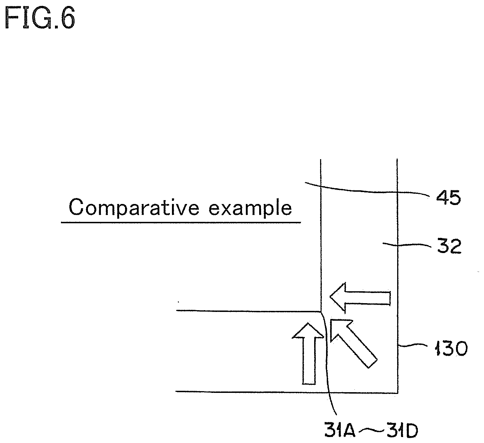

Fig. 2 is a cross-sectional view for illustrating a cell structure of the fuel cell shown in Fig. 1, Fig. 3 is a cross-sectional view for illustrating the shape of a resin frame integrated with a peripheral edge of a membrane electrode assembly shown in Fig. 2, Fig. 4 is a plan view for illustrating the shape of the membrane electrode assembly shown in Fig. 3, Fig. 5 is a schematic view for illustrating a resin pressure when chamfering is performed as shown in Fig. 4, Fig. 6 is a schematic view for illustrating a resin pressure of a comparative example in which the chamfering is not performed.

The unit cell 22 includes a membrane electrode assembly 30, separators 50 and 55, and a resin frame 60.

As shown in Fig. 2, the membrane electrode assembly 30 includes a polymer electrolyte membrane 32, catalyst layers 34 and 36 which functions as an electrode (a cathode or an anode), and gas diffusion layers 40 and 45.

The catalyst layer 34 includes a catalyst component, a conductive catalyst carrier carrying the catalyst component, and a polymer electrolyte, and is a cathode catalyst layer in which an oxidation reaction of hydrogen progresses, and is disposed on one side of the polymer electrolyte membrane 32. The catalyst layer 36 includes a catalyst component, a catalyst carrier carrying the catalyst component, and a polymer electrolyte, and is an anode catalyst layer in which a reduction reaction of oxygen progresses, and is disposed on the other side of the polymer electrolyte membrane 32.

The polymer electrolyte membrane 32 has a function of selectively transmitting protons generated in the catalyst layer (the anode catalyst layer) 36 to the catalyst layer (the cathode catalyst layer) 34, and a function as a partition wall not for mixing the fuel gas supplied to the anode side and the oxidizing gas supplied to the cathode side.

The gas diffusion layers 40 and 45 are, as shown in Fig. 2, configured of a conductive porous base material made of metal for supplying gas to the catalyst layers 34 and 36, are disposed on surfaces of the catalyst layers 34 and 36 in which the surfaces are opposite to surfaces on which the polymer electrolyte membrane is disposed. Accordingly, the gas diffusion layer 40 is disposed between the catalyst layer 34 and the separator 50, and the gas diffusion layer 45 is disposed between the catalyst layer 36 and the separator 55. The gas diffusion layers 40 and 45 are formed of metal, and thus it is easy to improve strength of the gas diffusion layer. In addition, it is preferable that the gas diffusion layers 40 and 45 are configured of a mesh (a metal mesh) in which a plurality of wire rods is combined. In this case, it is easy to make the gas diffusion layer thin.

From a viewpoint of supply properties of gas and a cell voltage, the number of meshes configuring the gas diffusion layers 40 and 45 is preferably greater than or equal to 100, and is more preferably 100 to 500. From a viewpoint of an abutting area with respect to the catalyst layers 34, 36 and ribs 52, 57 (described later) of the separators 50, 55, that is, electric resistance in the cell, a wire diameter of the mesh is preferably 25 µm to 110 µm. Weave (knit) of the mesh is not particularly limited, and for example, plain weave, twill, plain dutch weave, and twilled dutch weave can be applied. In addition, it is also possible to form the mesh by fixing the wire rods, for example, by welding without weaving.

The membrane electrode assembly 30 is in the shape of a rectangle and four corner portions 31A to 31D in the gas diffusion layer 45 are, as shown in Fig. 4, chamfered such that the corner portion does not have an acute angle. The chamfering, for example, is performed by obliquely cutting the corner portions 31A to 31D at 45 degrees, and the corner portions 31A to 31D do not have a right angle, but have two obtuse angles, that is, angles of 135 degrees. Accordingly, the chamfering can be simply and easily accomplished by a simple structure. The cutting angle is not particularly limited to 45 degrees insofar as the corner portions 31A to 31D have an obtuse angle greater than 90 degrees. Furthermore, the catalyst layers 34 and 36 are expensive, and thus are arranged corresponding to the shape of the corner portions 31A to 31D after being chamfered.

The chamfering of the corner portions 31A to 31D is performed in order to suppress defective molding when the resin frame 60 for reinforcement integrated with a peripheral edge of the membrane electrode assembly 30 is molded. That is, as described later, when resin frame 60 integrated with the peripheral edge of the membrane electrode assembly 30 is molded by disposing the membrane electrode assembly 30 in a cavity of a molding die, and by injecting a molding resin in a melted state toward the peripheral edge of the membrane electrode assembly 30, the corner portion at an obtuse angle in the membrane electrode assembly mitigates a resin pressure due to the injection of the molding resin or the flow of the molding resin (refer to Fig. 5), compared to a membrane electrode assembly 130 of a comparative example in which the corner portion is not chamfered (refer to Fig. 6). Therefore, intrusion of the molding resin due to deformation in the corner portion of the membrane electrode assembly 30, for example, warpage deformation of the gas diffusion layer 45 is prevented, and thus the defective molding can be suppressed. Furthermore, in Fig. 5 and Fig. 6, it is illustrated that the resin pressure according to Fig. 5 is mitigated compared to a case of Fig. 6 by the magnitude of an arrow.

The resin frame 60 is in the shape of a rectangular ring, is integrally disposed to surround the periphery of the membrane electrode assembly 30, increases mechanical strength of the membrane electrode assembly 30, and improves handling properties of the membrane electrode assembly 30. As shown in Fig. 3, the resin frame 60 is vertically asymmetrical, and corresponds to the peripheral shape of the separators 50 and 55. In addition, a part of the resin frame 60 extends so as to cover the anode side gas diffusion layer 45 for improving strength on the anode side.

As shown in Fig. 2, the separators 50 and 55 include the ribs 52 and 57, include a function of electrically connecting unit cells in series, and a function as a partition wall blocking the fuel gas, the oxidizing gas, and the cooling medium from each other, and have the substantially same shape as that of the membrane electrode assembly 30. The separators 50 and 55, for example, are formed by performing press processing to a stainless steel plate. The stainless steel plate is preferable from a viewpoint that complicated machine processing can be easily performed and electrical conductivity is excellent, and as necessary, corrosion resistant coating can be also applied.

The separator 50 is a cathode separator disposed on the cathode side of the membrane electrode assembly 30, and faces the catalyst layer 34. The separator 55 is an anode separator disposed on the anode side of the membrane electrode assembly 30, and faces the catalyst layer 36. The separators 50 and 55 include a plurality of manifolds for circulating the fuel gas, the oxidizing gas, and the cooling medium. The manifolds communicate with the fuel gas introduction port, the fuel gas discharge port, the oxidizing gas introduction port, the oxidizing gas discharge port, the cooling water introduction port, and the cooling water discharge port which are disposed on the end plate 90.

The ribs 52 and 57 are configured of a protruding portion including a rectangular cross-sectional surface formed of a part of the separators 50 and 55. The ribs 52 and 57, for example, are integrally formed by performing the press processing to the stainless steel plate which is a material of the separators 50 and 55.

The ribs 52 are disposed in parallel with a gas passage space 42 positioned between the membrane electrode assembly 30 and the separator 50. The gas passage space 42 is used for supplying the oxidizing gas to the catalyst layer 34. The ribs 57 are disposed in parallel with a gas passage space 47 positioned between the membrane electrode assembly 30 and the separator 55. The gas passage space 47 is used for supplying the fuel gas to the catalyst layer 36.

Next, the material, the size, or the like of each constituting member will be described in detail.

As the polymer electrolyte membrane 32, a fluorine system polymer electrolyte membrane composed of a perfluorocarbon sulfonic acid-based polymer, a hydrocarbon resin membrane having a sulfonic acid group, and a porous membrane impregnated with an electrolyte composition such as a phosphoric acid or an ionic liquid can be applied. The perfluorocarbon sulfonic acid-based polymer, for example, is Nafion (registered trademark, manufactured by Du Pont Kabushiki Kaisha), Aciplex (registered trademark, manufactured by Asahi Kasei Corporation), Flemion (registered trademark, manufactured by Asahi Glass Co., Ltd.), Gore select series (registered trademark, manufactured by W. L. Gore & Associates, Co., Ltd.), and the like. The porous membrane is formed of polytetrafluoroethylene (PTFE), and polyvinylidene fluoride (PVDF).

The thickness of the polymer electrolyte membrane 32 is not particularly limited, and from a viewpoint of strength, durability, and output properties, is preferably 5 µm to 300 µm, and is more preferably 10 µm to 200 µm.

The catalyst component used in the catalyst layer (the cathode catalyst layer) 34 is not particularly limited insofar as having a catalytic activity with respect to the reduction reaction of oxygen. The catalyst component used in the catalyst layer (the anode catalyst layer) 36 is not particularly limited insofar as having a catalytic activity with respect to the oxidation reaction of hydrogen.

A specific catalyst component, for example, is selected from metal such as platinum, ruthenium, iridium, rhodium, palladium, osmium, tungsten, lead, iron, chromium, cobalt, nickel, manganese, vanadium, molybdenum, gallium, and aluminum, an alloy thereof, and the like. Alternatively, a catalyst which does not include noble metal may be used. In order to improve catalytic activity, poisoning resistance with respect to carbon monoxide or the like, heat resistance, and the like, it is preferable that at least platinum is included. It is not necessary that the catalyst components applied to the cathode catalyst layer and the anode catalyst layer are identical to each other, but the catalyst component can be suitably selected.

The conductive catalyst carrier used in the catalyst layers 34 and 36 is not particularly limited insofar as having a specific surface area for carrying the catalyst component in a desired dispersion state, and sufficient electron conductivity as a current collector. However, including carbon particles as a main component is preferable. The carbon particles, for example, are composed of carbon black, activated carbon, coke, natural graphite, and artificial graphite.

The polymer electrolyte used in the catalyst layers 34 and 36 is not particularly limited insofar as composed of a member having at least high proton conductivity, and for example, a fluorine-based electrolyte including a fluorine atom in the entire polymer skeleton or a part thereof, and a hydrocarbon-based electrolyte not including a fluorine atom in a polymer skeleton can be applied. The polymer electrolyte used in the catalyst layers 34 and 36 may be identical to or different from the polymer electrolyte used in the polymer electrolyte membrane 32. However, from a viewpoint of improving adhesiveness of the catalyst layers 34 and 36 to the polymer electrolyte membrane 32, it is preferable that the polymer electrolyte used in the catalyst layers 34 and 36 and the polymer electrolyte used in the polymer electrolyte membrane 32 are the same.

A conductive material configuring the gas diffusion layers 40 and 45 is not particularly limited. For example, a material identical to a constituting material applied to the separators 50 and 55 can be suitably used. In addition, as a conductive material configuring the gas diffusion layers 40 and 45, a material of which a surface is covered with metal can be applied. In this case, as the metal on the surface, the same material as described above can be used, and it is preferable that a core material has conductivity. For example, a conductive polymer material or a conductive carbon material can be applied to the core material.

The surface of the gas diffusion layers 40 and 45 can be subjected to a corrosion prevention treatment, a water repelling treatment, and a hydrophilic treatment. The hydrophilic treatment, for example, is a coating of gold or carbon, and can suppress corrosion of the gas diffusion layers 40 and 45.

The water repelling treatment, for example, is a coating of a water repellent agent, and can suppress blocking or flooding of gas supply due to water by decreasing accumulation of water in an opening portion of the gas diffusion layers 40 and 45, securely make stable supply of gas to the catalyst layers 34 and 36, suppress a rapid decrease of the cell voltage, and stabilize the cell voltage. The water repellent agent, for example, is a fluorine-based polymer material, polypropylene, and polyethylene. The fluorine-based polymer material is PTFE, PVDF, polyhexafluoropropylene, a tetrafluoroethylene-hexafluoropropylene copolymer (FEP), and the like.

The hydrophilic treatment, for example, is a coating of a hydrophilic agent, and can decrease water clogging of the catalyst layers 34 and 36 by drawing liquid water from the catalyst layers 34 and 36 to a flow path side, suppress a rapid decrease of the cell voltage, and stabilize the cell voltage. The hydrophilic agent, for example, is a silane coupling agent or polyvinyl pyrrolidone (PVP) . It is possible to apply the hydrophilic treatment and the water repelling treatment to the separator side surface and the catalyst layer side surface of the gas diffusion layers 40 and 45, respectively.

As a resin configuring the resin frame 60, a thermoplastic resin or a thermosetting resin can be applied. The thermoplastic resin, for example, is plastic or elastomer formed of a polymer or a copolymer such as a liquid crystal polymer (LCP), polyphenylene sulfide (PPS), polyether sulfone (PES), polysulfone (PSF), polyether ether ketone (PEEK), polyimide (PI), polybutylene terephthalate (PBT), polyamide (PA), polypropylene (PP), polyurethane, and polyolefin. In addition, two or more of these thermoplastic resins may be used in combination (blend), or a filler may be suitably mixed thereto. The thermosetting resin, for example, is plastic or elastomer such as a melamine resin, an epoxy resin, a phenol resin, a dicyclopentadiene resin, silicon rubber, fluorine rubber, ethylene propylene diene rubber (EPDM), and the like.

The separators 50 and 55 are not limited to an embodiment composed of a stainless steel plate, and a metal material other than the stainless steel plate and carbon such as dense carbon graphite or a carbon plate can be applied. The metal material other than the stainless steel plate, for example, is an aluminum plate or a clad material. Furthermore, when carbon is applied, the ribs 52 and 57, for example, can be formed by cutting processing.

Next, a fuel cell manufacturing method according to the embodiment of the present invention will be described.

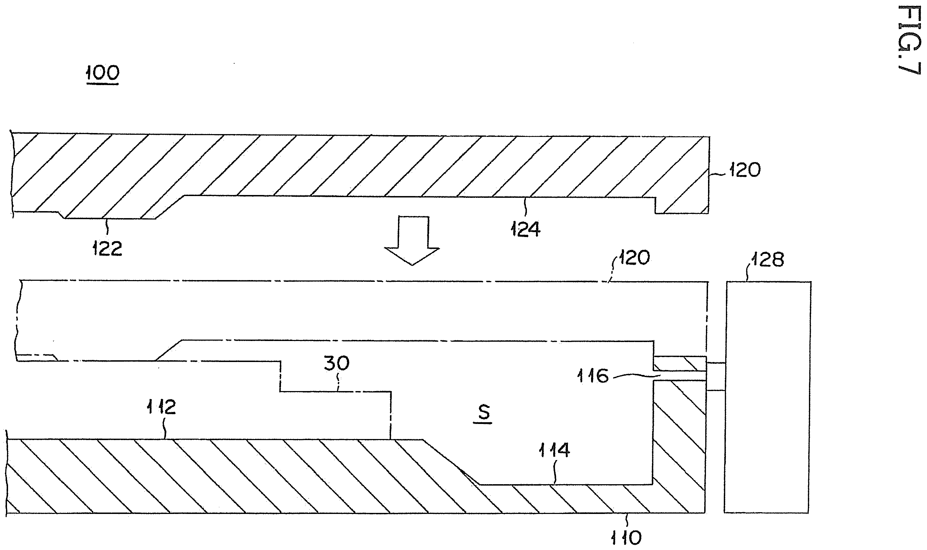

Fig. 7 is a cross-sectional view for illustrating a molding apparatus applied to resin frame molding in the fuel cell manufacturing method according to the embodiment of the present invention.

The fuel cell manufacturing method according to the embodiment of the present invention includes a gas diffusion layer forming step, a first stacking step, a second stacking step, a chamfering step, and a resin frame molding step.

In the gas diffusion layer forming step, the gas diffusion layers 40 and 45 are formed by the conductive porous base material formed of the mesh in which a plurality of metal wire rods is combined. In the first stacking step, the catalyst layers 34 and 36 are stacked on the surfaces of the polymer electrolyte membrane 32. In the second stacking step, the gas diffusion layers 40 and 45 are stacked on the surfaces which are opposite to the surfaces of the catalyst layers 34 and 36 on which the polymer electrolyte membrane 32 is disposed.

In the chamfering step, the four corner portions 31A to 31D of the gas diffusion layer 45 are chamfered such that the corner portion does not have an acute angle. The chamfering is performed by obliquely cutting the corner portion such that the corner portion has an obtuse angle. Accordingly, the chamfering can be simply and easily accomplished by a simple structure. The chamfering step is not limited to an embodiment in which the chamfering step is performed after the second stacking step, that is, after the gas diffusion layers 40 and 45 are stacked on the catalyst layers 34 and 36. The chamfering step may be performed before the second stacking step.

In the resin frame molding step after the chamfering step, the resin frame 60 for reinforcement integrated with the peripheral edge of the membrane electrode assembly 30 is molded by disposing the membrane electrode assembly 30, which is the stacked body in which the catalyst layer and the gas diffusion layer are stacked on the polymer electrolyte membrane, in the cavity of the molding die, and by injecting the molding resin in a melted state toward the peripheral edge of the membrane electrode assembly 30.

At this time, the corner portion having an obtuse angle in the membrane electrode assembly 30 mitigates the resin pressure, and can prevent the intrusion of the molding resin due to the deformation in the corner portion of the membrane electrode assembly 30, for example, the warpage deformation of the gas diffusion layer 45. That is, it is possible to provide the membrane electrode assembly manufacturing method which can suppress the defective molding when the resin frame integrated with the peripheral edge of the membrane electrode assembly is molded.

In addition, the strength of the membrane electrode assembly 30 is reinforced by the resin frame 60 integrated with the peripheral edge of the membrane electrode assembly 30, and thus it is possible to obtain the membrane electrode assembly 30 in which handling properties are improved.

Specifically, in the chamfering step, the four corner portions 31A to 31D of the anode side gas diffusion layer 45 of the membrane electrode assembly 30 are chamfered. The chamfering, for example, is performed by obliquely cutting the corner portions 31A to 31D at 45 degrees, and the corner portions 31A to 31D are configured to have two obtuse angles, that is, angles of 135 degrees.

In the resin frame molding step, for example, by a molding apparatus 100 shown in Fig. 7, the resin frame 60 is molded in the peripheral end portion of the membrane electrode assembly 30 which is the stacked body in which the catalyst layer and the gas diffusion layer are stacked on the polymer electrolyte membrane. The molding apparatus 100 is configured of an injection molding machine including a fixed die 110, a moving die 120, and an injection unit 128.

The fixed die 110 includes a central cavity surface 112 on which a cathode side gas diffusion layer 40 of the membrane electrode assembly 30 is placed, a peripheral cavity surface 114 positioned in an periphery of the central cavity surface 112, and a resin injection port 116 for introducing the molding resin in a melted state into the inside. The central cavity surface 112 is configured to be slightly larger than the cathode side gas diffusion layer 40 of the membrane electrode assembly 30.

The moving die 120 is configured such that the moving die 120 can be close to or separated from the fixed die 110, and includes a central cavity surface 122 facing the anode side gas diffusion layer 45 of the membrane electrode assembly 30, and a peripheral cavity surface 124 positioned in a periphery of the central cavity surface 122. When the fixed die 110 and the moving die 120 are clamped, the central cavity surface 122 is abutted to the anode side gas diffusion layer 45 of the membrane electrode assembly 30, and holds the membrane electrode assembly 30 in cooperation with the central cavity surface 112 of the fixed die 110 abutted to the cathode side gas diffusion layer 40. The central cavity surface 122 is configured to be slightly smaller than the anode side gas diffusion layer 45 of the membrane electrode assembly 30.

A space (a cavity) S, which is formed by the peripheral cavity surface 114 of the fixed die 110 and the peripheral cavity surface 124 of the moving die 120 when the fixed die 110 and the moving die 120 are clamped, defines the shape of the resin frame 60.

The injection unit 128 is used for supplying the molding resin in a melted state to the inside of the fixed die 110 and the moving die 120 which are clamped, and can communicate with the resin injection port 116. The injection unit 128, for example, includes a hopper storing the molding resin, a heater for heating and melting the molding resin, a screw and a cylinder for injecting the heated and melted molding resin, and a motor for driving the screw.

Next, the resin frame molding step will be described in detail.

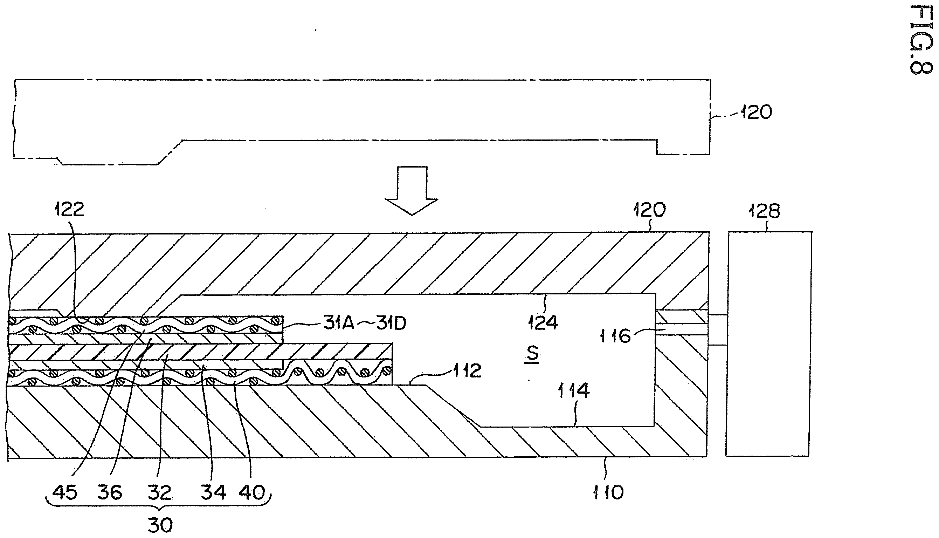

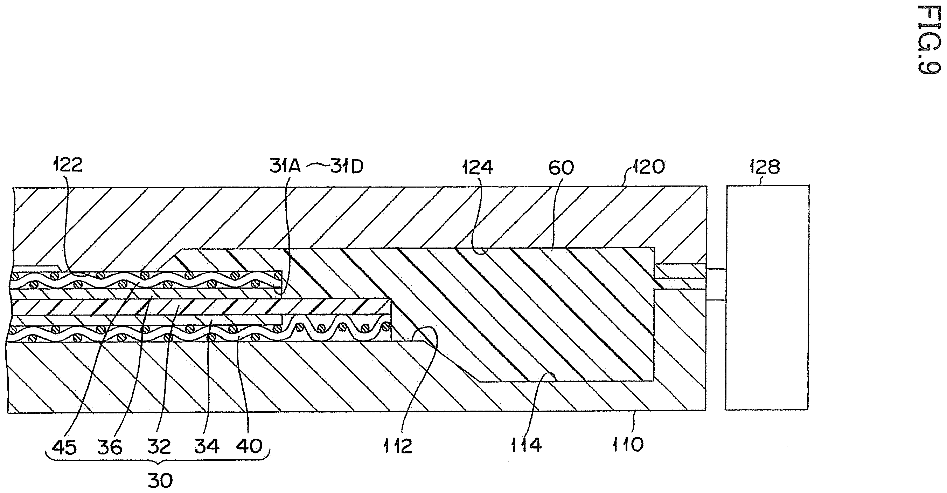

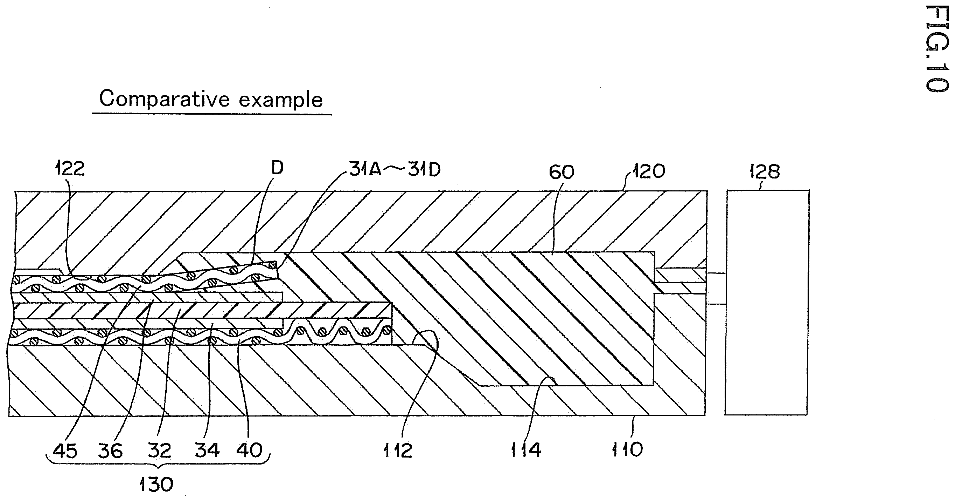

Fig. 8 is a cross-sectional view for illustrating the die clamping in the resin frame molding step, Fig. 9 is a cross-sectional view for illustrating resin injection in the resin frame molding step, and Fig. 10 is a cross-sectional view for illustrating resin injection according to the comparative example.

First, the fixed die 110 and the moving die 120 are heated up to a predetermined temperature . On the other hand, the molding resin is supplied to the hopper of the injection unit 128, and is melted by being heated to a predetermined temperature.

The membrane electrode assembly 30 is, with the cathode side gas diffusion layer 40 facing downward, placed and positioned on the central cavity surface 112 of the fixed die 110. The membrane electrode assembly 30 is fixed, for example, by a suction mechanism (not shown).

The moving die 120 is close to the fixed die 110, and as shown in Fig. 8, the fixed die 110 and the moving die 120 are clamped. Accordingly, the space (the cavity) S corresponding to the shape of the resin frame 60 is formed by the peripheral cavity surface 114 of the fixed die 110 and the peripheral cavity surface 124 of the moving die 120.

As shown in Fig. 9, the resin in a melted state, that is, the material of the resin frame 60 is injected into the space S (see Fig. 8) by the injection unit 128 through the resin injection port 116 of the fixed die 110.

At this time, the four corner portions 31A to 31D of the gas diffusion layer 45 are chamfered, the resin pressure is mitigated, and it is possible to prevent the intrusion of the molding resin due to the deformation in the corner portion of the membrane electrode assembly 30, for example, the warpage deformation of the gas diffusion layer 45. That is, in this embodiment, since the resin pressure is mitigated by the chamfering and the deformation of the membrane electrode assembly 30 is suppressed, it is possible to suppress the defective molding and decrease occurrence of a defective product. In contrast, in the comparative example 130 which is not chamfered, the resin pressure is not mitigated (see Fig. 6), and the membrane electrode assembly 130 may be deformed and generate the defective molding D as shown in Fig. 10.

Then, the pressure is maintained for a predetermined period of time. After that, when cooled up to a predetermined temperature, the dies are opened, and the membrane electrode assembly 30 is obtained in which the resin frame 60 is integrally disposed on the peripheral end portion.

Next, Modifications 1 to 7 according to the embodiment of the present invention will be described.

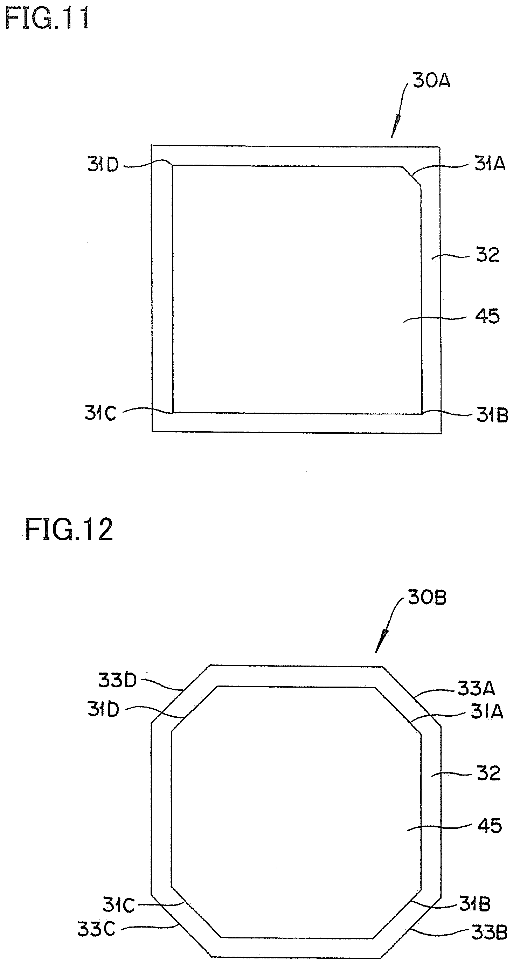

Fig. 11 is a plan view for illustrating Modification 1.

The chamfering is not limited to the embodiment in which all of the corner portions 31A to 31D are targeted, and it is possible to target only a part (the corner portion 31A) of the gas diffusion layer 45 as in a membrane electrode assembly 30A. For example, this embodiment is advantageous when the warpage deformation occurs only in a specific corner portion during the molding of the resin frame 60.

Fig. 12 is a plan view for illustrating Modification 2 (not according to the invention).

The chamfering portion is not limited to the anode side gas diffusion layer 45, and it is also possible to chamfer the polymer electrolyte membrane 32 and the cathode side gas diffusion layer 40 in the same way, as necessary. Furthermore, reference signs 33A to 33D indicate chamfered corner portions of the polymer electrolyte membrane 32.

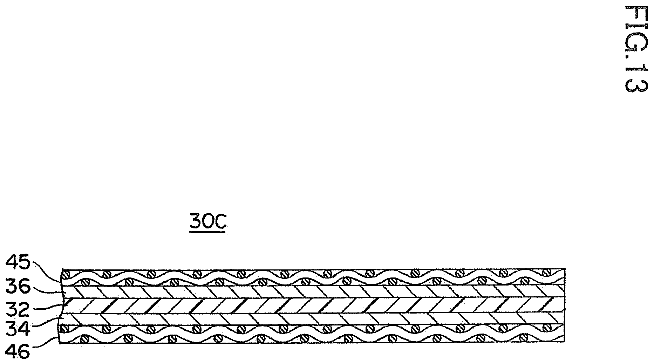

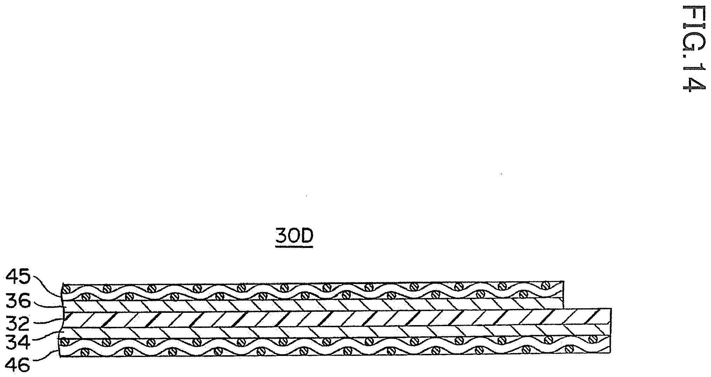

Fig. 13 and Fig. 14 are cross-sectional views for illustrating Modification 3 and Modification 4.

The size of the anode side (the gas diffusion layer 45 and the catalyst layer 36) is not limited to the size smaller than that of the cathode side (the gas diffusion layer 40 and the catalyst layer 34). For example, the size of the anode side may be the same size as that of the cathode side, or be greater than that of the cathode side.

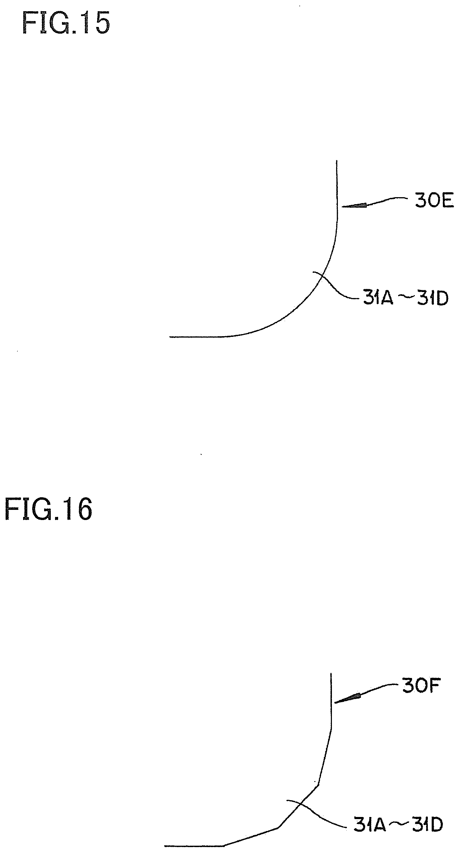

Figs. 15 to 17 are plan views for illustrating Modifications 5 to 7.

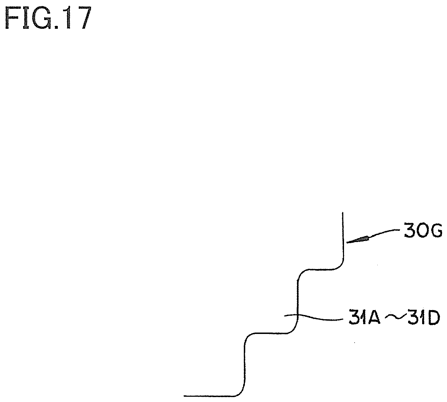

The chamfering for allowing the corner portion not to have an acute angle is not limited to the embodiment in which the corner portions 31A to 31D are obliquely cut, and may be performed by processing the corner portion into the curved surface-like shape of an arc as in a membrane electrode assembly 30E shown in Fig. 15. In this case, the chamfering can be simply and easily accomplished by a simple structure. In addition, the chamfering for allowing the corner portion not to have an acute angle may be performed by cutting the corner portion so that the corner portions 31A to 31D are configured of three or more obtuse angles as in a membrane electrode assembly 30F shown in Fig. 16, or by cutting the corner portion into the shape of a step as in a membrane electrode assembly 30G shown in Fig. 17, as necessary.

As described above, according to the membrane electrode assembly and the membrane electrode assembly manufacturing method of the present embodiment, when the resin frame integrated with the peripheral edge of the membrane electrode assembly is molded by disposing the membrane electrode assembly which is the stacked body in which the catalyst layer and the gas diffusion layer are stacked on the polymer electrolyte membrane, in the cavity of the molding die, and by injecting the molding resin in a melted state toward the peripheral edge of the membrane electrode assembly, the chamfered corner portion of the membrane electrode assembly mitigates the resin pressure due to the injection of the molding resin or the flow of the molding resin. For this reason, the intrusion of the molding resin due to deformation in the corner portion of the membrane electrode assembly, for example, warpage deformation of the gas diffusion layer can be prevented. That is, it is possible to suppress defective molding when the resin frame integrated with a peripheral edge of the membrane electrode assembly is molded.

In addition, when the membrane electrode assembly includes the resin frame which is disposed on the peripheral edge of the membrane electrode assembly and is integrated with the membrane electrode assembly, the strength of the membrane electrode assembly is reinforced, and thus handling properties are improved.

When the gas diffusion layer of the membrane electrode assembly is configured of the conductive porous base material made of metal, it is easy to improve the strength of the gas diffusion layer.

When the conductive porous base material is configured of the mesh in which the plurality of wire rods is combined, it is easy to reduce the weight of the gas diffusion layer.

When the corner portion which is chamfered so as not to have an acute angle is configured by the corner portion having an obtuse angle or the corner portion having a curved surface, the chamfering can be simply and easily accomplished by a simple structure.

When the molding step in which the resin frame integrated with the peripheral edge of the membrane electrode assembly is molded is further included after the chamfering step of the membrane electrode assembly manufacturing method, the strength of the membrane electrode assembly is reinforced, and thus it is possible to obtain the membrane electrode assembly in which handling properties are improved.

The present invention is not limited to the embodiment described above, and may be changed within the scope of claims. For example, it is possible to apply a punching metal, an expanded metal, an etching metal, a carbon porous material, or a conductive porous resin material to the gas diffusion layer. In addition, the molding of the resin frame is not limited to the embodiment to which the injection molding is applied. For example, it is also possible to suitably use RIM molding (Reactive Injection Molding) or transfer molding.

This application is based on Japanese Patent Application No. 2012-285047, filed December 27, 2012.

### [Explanation of reference signs]

- 10: Fuel cell
- 20: Stack portion
- 22: Unit cell
- 30, 30A to 30G, 130: Membrane electrode assembly
- 31A to 31D: Corner portion
- 32: Polymer electrolyte membrane
- 33A to 33D: Corner portion
- 34, 36: Catalyst layer
- 40, 45, 46: Gas diffusion layer
- 42, 47: Gas passage space
- 50, 55: Separator
- 52, 57: Rib
- 60: Resin frame
- 70: Fastening plate
- 75: Reinforcing plate
- 80: Current-collector plate
- 85: Spacer
- 90: End plate
- 95: Bolt
- 100: Molding apparatus
- 110: Fixed die
- 112: Central cavity surface
- 114: Peripheral cavity surface
- 116: Resin injection port
- 120: Moving die
- 122: Central cavity surface
- 124: Peripheral cavity surface
- 128: Injection unit
- D: Defective molding
- S: Space (cavity).

## Claims

1. A membrane electrode assembly (30, 30A-30G, 130) comprising:
a polymer electrolyte membrane (32);
a catalyst layer (34, 36) disposed on a surface of said polymer electrolyte membrane (32);
a gas diffusion layer (40, 45, 46) disposed on a surface of said catalyst layer (34, 36), said surface opposite to a surface on which said polymer electrolyte membrane (32) is disposed; and
a resin frame (60) for reinforcement disposed on a peripheral edge of a stacked body (20) in which said catalyst layer (34, 36) and said gas diffusion layer (40, 45, 46) are stacked on said polymer electrolyte membrane (32), and integrated with said stacked body (20),
wherein the membrane electrode assembly (30, 30A-30G, 130) is in the shape of a rectangle, **characterised in that** only said gas diffusion layer (40, 45, 46) includes a corner portion (31A-31D) which is chamfered such that the corner portion (31A-31D) does not have an acute angle.

2. The membrane electrode assembly according to claim 1, wherein said chamfered corner portion (31A-31D) is formed of a corner portion having an obtuse angle or a corner portion having a curved surface.

3. The membrane electrode assembly according to claim 1 or 2, wherein said gas diffusion layer (40, 45, 46) is configured of a conductive porous base material made of metal.

4. A membrane electrode assembly manufacturing method, comprising:
a step of stacking a catalyst layer (34, 36) on a surface of a polymer electrolyte membrane (32);
a step of stacking a gas diffusion layer (40, 45, 46) on a surface of said catalyst layer (34, 36), said surface opposite to a surface on which said polymer electrolyte membrane (32) is disposed;
a chamfering step of chamfering a corner portion of said gas diffusion layer such that the corner portion (31A-31D) does not have an acute angle by perpendicularly cutting the corner portion with respect to a surface direction of said gas diffusion layer (40, 45, 46) except for corner portions of said polymer electrolyte membrane (32) and said catalyst layer (34, 36), after said stacking step; and
a step of molding a resin frame (60) integrated with a peripheral edge of a stacked body (20) by disposing the stacked body (20) in which said catalyst layer (34, 36) and said gas diffusion layer (40, 45, 46) are stacked on said polymer electrolyte membrane (32), in a cavity (S) of a molding die, and by injecting a molding resin in a melted state toward the peripheral edge of the stacked body (20), after said chamfering step.

5. A membrane electrode assembly manufacturing method comprising:
a step of stacking a catalyst layer (34, 36) on a surface of a polymer electrolyte membrane (32);
a step of stacking a gas diffusion layer (40, 45, 46) on a surface of said catalyst layer (34, 36), said surface opposite to a surface on which said polymer electrolyte membrane (32) is disposed;
a chamfering step of chamfering only a corner portion of said gas diffusion layer (40, 45, 46) such that the corner portion (31A-31D) does not have an acute angle by perpendicularly cutting the corner portion with respect to a surface direction of said gas diffusion layer (40, 45, 46); and
a step of molding a resin frame (60) integrated with a peripheral edge of a stacked body (20) by disposing the stacked body (20) in which said catalyst layer (34, 36) and said gas diffusion layer (40, 45, 46) are stacked on said polymer electrolyte membrane (32), in a cavity (S) of a molding die, and by injecting a molding resin in a melted state toward the peripheral edge of the stacked body (20), after said chamfering step,
wherein said chamfering step is performed before said gas diffusion layer (40, 45, 46) is stacked on said catalyst layer (34, 36).

6. The membrane electrode assembly manufacturing method according to claim 4, wherein said chamfering step is performed after said gas diffusion layer (40, 45, 46) is stacked on said catalyst layer (34, 36).

7. The membrane electrode assembly manufacturing method according to any of claims 4 to 6, further comprising a step of forming said gas diffusion layer (40, 45, 46) by a conductive porous base material formed of a mesh in which a plurality of metal wire rods is combined.

## Patentansprüche

1. Membranelektrodenanordnung (30, 30A-30G, 130), umfassend:
eine Polymerelektrolytmembran (32);
eine Katalysatorschicht (34, 36), die auf einer Oberfläche der Polymerelektrolytmembran (32) angeordnet ist;
eine Gasdiffusionsschicht (40, 45, 46), die auf einer Oberfläche der Katalysatorschicht (34, 36) angeordnet ist, wobei die Oberfläche einer Oberfläche gegenüberliegt, auf der die Polymerelektrolytmembran (32) angeordnet ist; und
einen Harzrahmen (60) zur Verstärkung, der an einem Umfangsrand eines gestapelten Körpers (20) angeordnet ist, bei dem die Katalysatorschicht (34, 36) und die Gasdiffusionsschicht (40, 45, 46) auf der Polymerelektrolytmembran (32) gestapelt sind, und in den gestapelten Körper (20) integriert sind,
wobei die Membranelektrodenanordnung (30, 30A-30G, 130) die Form eines Rechtecks aufweist,
**dadurch gekennzeichnet, dass**
nur die Gasdiffusionsschicht (40, 45, 46) einen Eckbereich (31A-31D) umfasst, der so abgeschrägt ist, dass der Eckbereich (31A-31D) keinen spitzen Winkel aufweist.

2. Membranelektrodenanordnung nach Anspruch 1, wobei der abgeschrägte Eckbereich (31A-31D) aus einem Eckbereich mit einem stumpfen Winkel oder einem Eckbereich mit gekrümmter Oberfläche gebildet ist.

3. Membranelektrodenanordnung nach Anspruch 1 oder 2, wobei die Gasdiffusionsschicht (40, 45, 46) aus einem leitfähigen porösen Basismaterial aus Metall konfiguriert ist.

4. Verfahren zum Herstellen einer Membranelektrodenanordnung, umfassend:
einen Schritt des Stapelns einer Katalysatorschicht (34, 36) auf einer Oberfläche einer Polymerelektrolytmembran (32);
einen Schritt des Stapelns einer Gasdiffusionsschicht (40, 45, 46) auf einer Oberfläche der Katalysatorschicht (34, 36), wobei die Oberfläche einer Oberfläche gegenüberliegt, auf der die Polymerelektrolytmembran (32) angeordnet ist;
einen Abschrägungsschritt zum Abschrägen eines Eckbereichs der Gasdiffusionsschicht, sodass der Eckbereich (31A-31D) keinen spitzen Winkel aufweist, durch senkrechtes Schneiden des Eckbereichs in Bezug auf eine Oberflächenrichtung der Gasdiffusionsschicht (40, 45, 46) mit Ausnahme von Eckbereichen der Polymerelektrolytmembran (32) und der Katalysatorschicht (34, 36) nach dem Stapelschritt; und
einen Schritt des Formens eines Harzrahmens, der in einem Umfangsrand eines gestapelten Körpers (20) integriert ist, durch Anordnen des gestapelten Körpers (20), bei dem die Katalysatorschicht (34, 36) und die Gasdiffusionsschicht (40, 45, 46) auf der Polymerelektrolytmembran (32) gestapelt sind, in einem Hohlraum (S) eines Formwerkzeugs, und durch Einspritzen eines Formharzes in geschmolzenem Zustand in Richtung des Umfangsrands des gestapelten Körpers (20) nach dem Abschrägungsschritt.

5. Herstellungsverfahren für eine Membranelektrodenanordnung, umfassend:
einen Schritt des Stapelns einer Katalysatorschicht (34, 36) auf einer Oberfläche einer Polymerelektrolytmembran (32);
einen Schritt des Stapelns einer Gasdiffusionsschicht (40, 45, 46) auf einer Oberfläche der Katalysatorschicht (34, 36), wobei die Oberfläche einer Oberfläche gegenüberliegt, auf der die Polymerelektrolytmembran (32) angeordnet ist;
einen Abschrägungsschritt zum Abschrägen nur eines Eckbereichs der Gasdiffusionsschicht (40, 45, 46), sodass der Eckbereich (31A - 31D) keinen spitzen Winkel aufweist, durch senkrechtes Schneiden des Eckbereichs in Bezug auf eine Oberflächenrichtung der Gasdiffusionsschicht (40, 45, 46); und
einen Schritt des Formens eines Harzrahmens (60), der in einem einem Umfangsrand eines gestapelten Körpers (20) integriert ist, durch Anordnen des gestapelten Körpers (20), bei dem die Katalysatorschicht (34, 36) und die Gasdiffusionsschicht (40, 45, 46) auf der Polymerelektrolytmembran (32) gestapelt sind, in einem Hohlraum (S) eines Formwerkzeugs, und durch Einspritzen eines Formharzes in geschmolzenem Zustand in Richtung des Umfangsrands des gestapelten Körpers (20) nach dem Abschrägungsschritt,
wobei der Abschrägungsschritt ausgeführt wird, bevor die Gasdiffusionsschicht (40, 45, 46) auf die Katalysatorschicht (34, 36) gestapelt wird.

6. Verfahren zur Herstellung einer Membranelektrodenanordnung nach Anspruch 4, wobei der Abschrägungsschritt durchgeführt wird, nachdem die Gasdiffusionsschicht (40, 45, 46) auf der Katalysatorschicht (34, 36) gestapelt wurde.

7. Verfahren zur Herstellung einer Membranelektrodenanordnung nach einem der Ansprüche 4 bis 6, ferner umfassend einen Schritt des Bildens der Gasdiffusionsschicht (40, 45, 46) durch ein leitfähiges poröses Basismaterial, das aus einem Geflecht gebildet ist, bei dem eine Vielzahl von Metalldrahtstäben kombiniert ist.

## Revendications

1. Ensemble membrane-électrode (30, 30A-30G, 130) comprenant :
une membrane électrolytique polymère (32) ;
une couche de catalyseur (34, 36) disposée sur une surface de ladite membrane électrolytique polymère (32) ;
une couche de diffusion de gaz (40, 45, 46) disposée sur une surface de ladite couche de catalyseur (34, 36), ladite surface étant opposée à une surface sur laquelle ladite membrane électrolytique polymère (32) est disposée ; et
un cadre en résine (60) pour renforcement disposé sur un bord périphérique d'un corps empilé (20) dans lequel ladite couche de catalyseur (34, 36) et ladite couche de diffusion de gaz (40, 45, 46) sont empilées sur ladite membrane électrolytique polymère (32), et intégré audit corps empilé (20),
dans lequel l'ensemble membrane-électrode (30, 30A-30G, 130) se présente sous la forme d'un rectangle, **caractérisé en ce que**
seule ladite couche de diffusion de gaz (40, 45, 46) comporte une partie de coin (31A-31D) qui est chanfreinée de sorte que la partie de coin (31A-31D) ne présente pas d'angle aigu.

2. Ensemble membrane-électrode selon la revendication 1, dans lequel ladite partie de coin chanfreinée (31A-31D) est formée d'une partie de coin ayant un angle obtus ou d'une partie de coin ayant une surface incurvée.

3. Ensemble membrane-électrode selon la revendication 1 ou 2, dans lequel ladite couche de diffusion de gaz (40, 45, 46) est configurée d'un matériau de base poreux conducteur réalisé en métal.

4. Procédé de fabrication d'un ensemble membrane-électrode, comprenant :
une étape d'empilement d'une couche de catalyseur (34, 36) sur une surface d'une membrane électrolytique polymère (32) ;
une étape d'empilement d'une couche de diffusion de gaz (40, 45, 46) sur une surface de ladite couche de catalyseur (34, 36), ladite surface étant opposée à une surface sur laquelle ladite membrane électrolytique polymère (32) est disposée ;
une étape de chanfreinage consistant à chanfreiner une partie de coin de ladite couche de diffusion de gaz de sorte que la partie de coin (31A-31D) ne présente pas d'angle aigu en coupant perpendiculairement la partie de coin par rapport à une direction de surface de ladite couche de diffusion de gaz (40, 45, 46) à l'exception des parties de coin de ladite membrane électrolytique polymère (32) et de ladite couche de catalyseur (34, 36), après ladite étape d'empilement ; et
une étape de moulage d'un cadre en résine (60) intégré à un bord périphérique d'un corps empilé (20) en disposant le corps empilé (20) dans lequel ladite couche de catalyseur (34, 36) et ladite couche de diffusion de gaz (40, 45, 46) sont empilées sur ladite membrane électrolytique polymère (32), dans une cavité (S) d'une matrice de moulage, et en injectant une résine de moulage à l'état fondu vers le bord périphérique du corps empilé (20), après ladite étape de chanfreinage.

5. Procédé de fabrication d'un ensemble membrane-électrode comprenant :
une étape d'empilement d'une couche de catalyseur (34, 36) sur une surface d'une membrane électrolytique polymère (32) ;
une étape d'empilement d'une couche de diffusion de gaz (40, 45, 46) sur une surface de ladite couche de catalyseur (34, 36), ladite surface étant opposée à une surface sur laquelle ladite membrane électrolytique polymère (32) est disposée ;
une étape de chanfreinage consistant à chanfreiner seulement une partie de coin de ladite couche de diffusion de gaz (40, 45, 46) de sorte que la partie de coin (31A-31D) ne présente pas d'angle aigu en coupant perpendiculairement la partie de coin par rapport à une direction de surface de ladite couche de diffusion de gaz (40, 45, 46) ; et
une étape de moulage d'un cadre en résine (60) intégré à un bord périphérique d'un corps empilé (20) en disposant le corps empilé (20) dans lequel ladite couche de catalyseur (34, 36) et ladite couche de diffusion de gaz (40, 45, 46) sont empilées sur ladite membrane électrolytique polymère (32), dans une cavité (S) d'une matrice de moulage, et en injectant une résine de moulage à l'état fondu vers le bord périphérique du corps empilé (20), après ladite étape de chanfreinage,
où ladite étape de chanfreinage est effectuée avant que ladite couche de diffusion de gaz (40, 45, 46) ne soit empilée sur ladite couche de catalyseur (34, 36).

6. Procédé de fabrication d'un ensemble membrane-électrode selon la revendication 4, dans lequel ladite étape de chanfreinage est effectuée après que ladite couche de diffusion de gaz (40, 45, 46) est empilée sur ladite couche de catalyseur (34, 36).

7. Procédé de fabrication d'un ensemble membrane-électrode selon l'une des revendications 4 à 6, comprenant en outre une étape consistant à former ladite couche de diffusion de gaz (40, 45, 46) par un matériau de base poreux conducteur formé d'un treillis dans lequel une pluralité de tiges de fil métallique est combinée.
